# EUROPEAN PATENT SPECIFICATION

(11) **EP 0 122 094 B1**
(45) Date of publication and mention of the grant of the patent: **10.11.1993**
(21) Application number: 84302203.9
(22) Date of filing: 30.03.1984
(51) Int. Cl.: H04N 5/76, H04N 5/783, H04N 1/20

(54) **Electronic still store with high speed sorting and method of operation**
Elektronischer Einzelbildspeicher mit Schnellsortierung und Verfahren zu seinem Betrieb
Dispositif électronique de stockage d'images fixes avec triage à grande vitesse et sa méthode de fonctionnement

(30) Priority: 08.04.1983 US 483327
(43) Date of publication of application: 17.10.1984
(73) Proprietor: AMPEX SYSTEMS CORPORATION, Redwood City, California 94063-3199 (US)
(72) Inventor: Beaulier, Daniel A., Menlo Park, CA 94025 (US)
(74) Representative: Horton, Andrew Robert Grant

(56) References cited:
- DE-A- 3 113 134
- GB-A- 2 064 260
- US-A- 4 028 733
- US-A- 4 302 776

## Description

### Background of the Invention

This invention relates to a digital electronic still store for broadcast television signals and more particularly to a still store providing a high speed multi-image scan or sort capability.

Digital electronic still store video display systems store a plurality of frames of video images on relatively low cost magnetic disk storage. Any selected one of the stored image frames may then be communicated to a frame store from which data defining the image is repetitively read out to generate a continuously displayed television image. The still store image can then be combined with a second image to create a combined video image. For example, it is common to insert a selected still store image depicting a news event in the upper left hand corner of a live studio image depicting a newscaster describing the news event.

The disk store is capable of storing a large library of single frame images and it is often desirable to generate a reduced size multiple image picture for editing or other purposes. For example, it might be desirable to create a special effect with multiple images or an editor may wish to view and compare several images at the same time for the purpose of selecting those images which will be used in a television broadcast. However, each of the several images which are to be simultaneously displayed must first be read from the disk store as full size images and then reduced for insertion into the multi-image display. This process takes 1/4 to 1/2 second for each image and results in a delay of several seconds for the composite multi-image display. Such a time delay is at best disconcerting for a busy editor and precludes use of the editing features of the system during a real time broadcast.

U.S. Patent 4,302,776, "Digital Still Picture Storage System With Size Change Facility", to Taylor et al discloses a still store system having the features set forth in the pre-characterising part of each of the independent claims herein. In the known system, multiple images may be accessed and reduced in size for simultaneous display as discussed above. In particular the system includes a frame store, a bulk image store and a size reducer. The frame store is arranged to receive, transfer to the bulk image store and output repetitively normal image data and the bulk image store is arranged to receive and store image data from the frame store and to provide selected image data to the frame store when the frame store is not otherwise in use. The size reducer may be disposed either in a input data path between the frame store and the bulk store or in an output data path between the bulk store and the frame store. Thus the frame store is capable of receiving from the bulk store, as an alternative to a single normal resolution image frame, a composite image frame composed of a selection of reduced resolution copies retrieved from the bulk image store.

In one aspect the invention provides an electronic still store system comprising: an image store arranged for retrievably storing therein a plurality of frames of video images at a full resolution, the image store being capable of storing reduced spatial resolution image frames; a frame store which is operable to receive a full spatial resolution image frame and to transfer it to the image store, the frame store being operable to receive from the image store a selected video image frame for output, this image frame being either a single full resolution image frame or an image frame comprising reduced resolution image frames; and a size reducer coupled to receive from the frame store a full spatial resolution image frame and in response thereto to produce a reduced spatial resolution copy; characterized in that the size reducer is arranged to return to the frame store the reduced spatial resolution copy, the frame store is operable to receive and store the reduced spatial resolution copy while continuing to store the full spatial resolution image frame, and the image store is arranged to receive and store such a reduced resolution copy in addition to each of a plurality of full resolution image frames that it receives from the frame store.

In another aspect the invention provides an electronic still store system comprising: a frame store, a bulk image store and a size reducer, the frame store being arranged to receive, transfer to the bulk image store and output repetitively normal image data and the bulk image store being arranged to receive and store image data from the frame store and to provide selected image data to the frame store, the frame store being capable of receiving from the image store, as an alternative to a single normal resolution image frame, a composite image frame composed of a selection of reduced resolution images retrieved from the bulk image store, characterized in that the size reducer is arranged to provide to the frame store a reduced resolution copy of a normal resolution image frame stored in the frame store, the frame store being arranged to store the normal resolution image frame temporarily in first storage locations and the copy thereof in second storage locations, and further characterized in that the bulk image store receives from the frame store and stores a reduced resolution copy of each normal resolution image frame that it receives from the frame store; the data for the said composite image frame being temporarily stored in the said first storage locations.

The invention also provides a method of operating a video still store system having an image store and a frame store coupled for bidirectional communication of video data with the image store, comprising in the following order the steps of:
(a) writing into the frame store video data representing full resolution images;
(b) transferring to the image store from the frame store video data representing a plurality of full resolution images, generating for each of a plurality of full resolution images originally written into the frame store a respective reduced resolution copy and returning said respective copy to the frame store so that the video data representing each of a plurality of full resolution images written into the image store is accompanied by a respective reduced resolution copy; and
(c) transferring from the image store to the frame store, for assembly in the frame store as a single composite image, video data representing a reduced resolution copy of each of a selected plurality of full resolution images.

Preferably the said video data transferred from the image store to the frame store is stored in locations selected to produce a composite image having each of the images represented by the transferred video data positioned at a selected different position within the composite image.

The image store employed herein may be a general purpose magnetic disk storage system as is currently used in general purpose digital computer systems.

In operation the system may rapidly assemble an array of reduced size images for output as a single image frame. A system operator may view the reduced size images simultaneously for rapid scanning of some or all of the stored images within the image store, which is preferably a magnetic disk. Because the images are read from the image store in reduced size and spatial resolution, the output image formation time is approximately the 1/4 to 1/2 second required to transfer a single full size image instead of the several seconds required for the transfer of, for example, sixteen full size images prior to resolution reduction and storage as a reduced size image.

Using this system an operator may rapidly scan many still frame images which are stored by the image store or may compile lists of randomly selected image frames for simultaneous viewing as an array of reduced size images. Because of the rapid response rate the system becomes feasible for development and outputting of data frames containing multiple reduced size images on demand during a television broadcast.

### BRIEF DESCRIPTION OF THE DRAWING

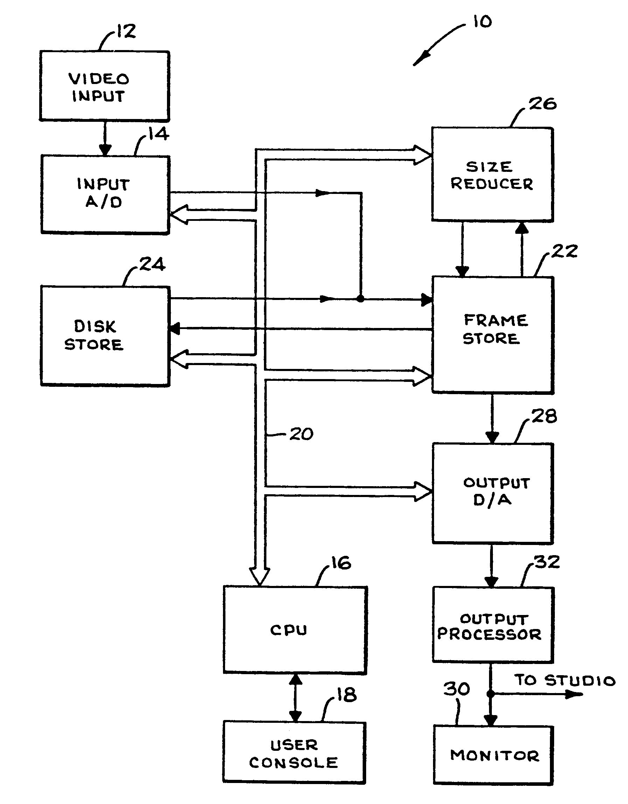

A better understanding of the invention may be had from a consideration of the following detailed description taken in conjunction with the accompanying drawing which FIGURE 1 is a block diagram representation of an electronic still store system in accordance with the invention.

### DETAILED DESCRIPTION

Referring now to FIGURE 1, a digital electronic still store system 10 for rapidly assembling as a single image frame an array of reduced size images is shown as including a video input circuit 12. The video input circuit 12 may be another electronic still store system, a TV camera, or some other source of video data from which one or more frames of a video image may be captured. In a referred embodiment of the electronic still store system 10, the video signal is processed in component form.
Therefore, the video input 12 will include appropriate video signal decoding means to process video data received from sources that provide the data in an encoded form.

An input analog-to-digital (A-D) converter 14 is coupled to receive an input video signal provided by the video input circuit 12, which typically includes video signal processing circuitry that prepares the signal for conversion by the A-D converter 14. The A-D converter 14 converts the input video signal to a digital form which is suitable for handling and processing by digital circuitry, and in particular the converter 14 converts the video signal received from the video input into a digital sampled data form in which each pixel of video data is represented by three eight bit data bytes luminance, red chrominance and blue chrominance components. Conventionally, the chrominance data has half the spatial resolution of the luminance data in the horizontal dimension so that data is produced in a repetitive 4 byte luminance/chrominance component sequence of L1, CR1, CB1, L2---L3, CR3, CB3, L4 and so fourth. The single byte representation afford a high dynamic resolution of 256 distinguishable states for each color component. For adequate dynamic resolution, each video component at a sampled data point is preferably defined by at least 6 binary bits providing 64 distinguishable intensities. A central processing unit (CPU) 16 formed from a Z80 microprocessor is connected to receive operator commands from a user console 18. CPU 16 is connected for bidirection communication of commands and other data over a system bus 20. The system bus 20 is connected to input A-D 14 as well as other major components of the still store system 10 to carry the address, mode select and status information required to control the operation of the still store system 10.

A frame store 22 is coupled to receive mode control information from CPU 16 over system bus 20 and to receive video data representing a frame of a video image from either input A-D 14 or a multiple frame image store implemented as a magnetic disk drive store 24. Frame store 22 is a random access store that is capable of storing more data than is required for a single video image frame.

The storage capacity provided by presently 64K memory chips enables storing up to 750 lines of video data. In any event, out of a 525 line NTSC frame of data only about 484 lines represent video data. Because of the two dimensional nature of a video image an image defined by video data having a given fraction (such as one quarter) the spatial resolution of a full size image requires the square of that fraction (i.e. one sixteenth) of the storage capacity of a full size image of full spatial resolution. A quarter resolution image thus requires the equivalent storage of 30 lines of a full resolution image. In any event the frame store 22 either contains initially or is expanded to contain storage of video data representing a full resolution, full size image and a reduced resolution copy, in this embodiment a quarter-resolution copy.

A size reducer 26 is connected to be controlled by data from CPU 16 received over the system bus 20. Size reducer 26 is operable to receive video data from frame store 22 to convert the video data to a quarter spatial resolution copy thereof, and communicate the quarter copy back to frame store 22 for storage therein. In a fashion, when video data received from disk store 24 does not contain a corresponding quarter spatial resolution copy, size reducer 26 may be employed to generate a quarter spatial resolution copy for subsequent transfer to either the frame store 22 or disk store 24. Hence, any time frame store 22 receives a video image frame that does not have a corresponding quarter resolution copy the size reducer 26 may be used to make such a copy.

As a new frame of video data is transferred from frame store 22 to disk store 24 for more permanent storage, both the full resolution and the quarter resolution copy are transferred. Since the quarter resolution copy requires only one-sixteenth the data of a full resolution copy, the communication and storage of the quarter resolution copy imposes only a small burden on both system operating time and extra storage space requirement within disk store 24. It should be noted that disk store 24 is a general purpose magnetic disk storage device as is commonly used in connection with general purpose digital computing systems.

During operation of the system frame store 22 repetitively accesses stored video data to generate a continous stream of output video data frames representing the stored image. An output digital-to-analog converter 28 receives this digital output data and converts it to an analog video signal from which is subsequently supplied to output processor 32. Output processor 32 may be an ordinary video signal output processor to form a television signal in a standard format, which can be used to drive a monitor 30 for viewing of the output video image by a system monitor. The analog video signal may also be communicated to studio equipment for further use, broadcasting or storage.

When operating in a first, normal broadcast mode, frame store 22 receives a full resolution frame of video data from disk store 24 and outputs a continuous television image in digital data form in response thereto.

In a second, editing or browsing mode, CPU 16 commands disk store 24 to output reduced resolution image data which is selectively positioned in frame store 22 for viewing in one of 16 reduced size image positions in a 4 x 4 array within a normal full size image. Under operator control, the 16 viewable images may be taken sequentially from disk store 24 starting with a selected image frame. This mode is useful when scanning all of the images stored by disk store 24. Alternatively, the 16 images may be taken randomly from a list of stored images developed by the operator. This mode is especially useful when it is desired to compare certain images.

The 16 image assembly time is greatly reduced because only an amount of data equivalent to one full size, full spatial resolution, image need be transferred from disk store 24 to define all 16 images. This is only one-sixteenth of the time that would normally be required.

## Claims

1. An electronic still store system comprising: an image store (24) arranged for retrievably storing therein a plurality of frames of video images at a full resolution, the image store being capable of storing reduced spatial resolution image frames; a frame store (22) which is operable to receive a full spatial resolution image frame and to transfer it to the image store (24), the frame store being operable to receive from the image store a selected video image frame for output, this image frame being either a single full resolution image frame or an image frame comprising reduced resolution image frames; and a size reducer (26) coupled to receive from the frame store a full spatial resolution image frame and in response thereto to produce a reduced spatial resolution copy; characterised in that the size reducer (26) is arranged to return to the frame store (22) the reduced spatial resolution copy, the frame store (22) is operable to receive and store the reduced spatial resolution copy while continuing to store the full spatial resolution image frame, and the image store (24) is arranged to receive and store such a reduced resolution copy in addition to each of a plurality of full resolution image frames that it receives from the frame store.

2. A system according to claim 1, wherein the reduced spatial resolution copy has a spatial resolution of one-fourth the spatial resolution of the full spatial resolution image frame.

3. A system according to claim 1 or 2, wherein a central processing unit (16) is coupled to select in response to control by an operator the retrieval of a plurality of reduced spatial resolution image frames from the image store and the placement of the retrieved image frames as reduced size images within an output image frame generated by the frame store.

4. A system according to any foregoing claim, further comprising an output digital-to-analog converter (28) coupled to receive output image frames from the frame store and in response thereto to generate an analog video signal representing the received output image frames.

5. A system according to any foregoing claim, further comprising means (12) generating an analog video signal representing a sequence of video image frames and an analog-to-digital converter (14) arranged for converting the analog video signal to a digital form in which digital data representing a video image frame can be received and stored by the frame store.

6. A system according to claims 3 to 5, further comprising a user console (18) coupled to receive operator commands and output received operator commands to the central processing unit, the central processing unit being coupled to receive the operator commands output by the operator console and in response thereto to generate control signals for controlling system devices including the input analog-to-digital converter, the image store, the frame store, the size reducer, and the output digital-to-analog converter, and a system bus (20) coupling the control signals to the controlled system devices.

7. An electronic still store system comprising: a frame store (22), a bulk image store (24) and a size reducer (26), the frame store being arranged to receive, transfer to the bulk image store and output repetitively normal image data and the bulk image store being arranged to receive and store image data from the frame store and to provide selected image data to the frame store, the frame store being capable of receiving from the image store, as an alternative to a single normal resolution image frame, a composite image frame composed of a selection of reduced resolution images retrieved from the bulk image store, characterised in that the size reducer is arranged to provide to the frame store a reduced resolution copy of a normal resolution image frame stored in the frame store, the frame store being arranged to store the normal resolution image frame temporarily in first storage locations and the copy thereof in second storage locations, and further characterised in that the bulk image store receives from the frame store and stores a reduced resolution copy of each normal resolution image frame that it receives from the frame store; the data for the said composite image frame being temporarily stored in the said first storage locations.

8. A method of operating a video still store system having an image store (24) and a frame store (22) coupled for bidirectional communication of video data with the image store, comprising in the following order the steps of:
(a) writing into the frame store video data representing full resolution images;
(b) transferring to the image store from the frame store video data representing a plurality of full resolution images, generating for each of a plurality of full resolution images originally written into the frame store a respective reduced resolution copy and returning said respective copy to the frame store so that the video data representing each of a plurality of full resolution images written into the image store is accompanied by a respective reduced resolution copy; and
(c) transferring from the image store to the frame store, for assembly in the frame store as a single composite image, video data representing a reduced resolution copy of each of a selected plurality of full resolution images.

9. A method according to claim 8, wherein each reduced resolution copy has a spatial resolution of one-fourth the spatial resolution of the corresponding full resolution image in each of two display dimensions.

10. A method according to claim 8 or claim 9 in which the said video data transferred from the image store to the frame store is stored in locations selected to produce a composite image having each of the images represented by the transferred video data positioned at a selected different position within the composite image.

## Patentansprüche

1. Elektronisches Standbildspeichersystem umfassend: einen Bildspeicher (24) zur wiederauslesbaren Speicherung einer Vielzahl von Vollbildern von Videobildern bei einer vollen Auflösung, der Bild-Vollbilder verringerter räumlicher Auflösung zu speichern vermag; einen zur Aufnahme eines Bild-Vollbildes voller räumlicher Auflösung und dessen Übertragung zum Bildspeicher (24) betreibbaren Vollbildspeicher (22), wobei dieses Bild-Vollbild entweder ein einzelnes Bild-Vollbild voller Auflösung oder ein Bild-Vollbilder reduzierter Auflösung umfassendes Bild-Vollbild ist; und einen Größenreduzierer (26), der zur Aufnahme eines Bild-Vollbildes voller räumlicher Auflösung vom Vollbildspeicher und in Abhängigkeit davon zur Erzeugung einer Kopie reduzierter räumlicher Auflösung gekoppelt ist, **dadurch gekennzeichnet**, daß der Größenreduzierer (26) zur Rückführung der Kopie reduzierter räumlicher Auflösung zum Vollbildspeicher (22) eingerichtet ist, der Vollbildspeicher (22) zur Aufnahme und Speicherung der Kopie reduzierter räumlicher Auflösung bei fortgesetzter Speicherung des Bild-Vollbildes voller räumlicher Auflösung betreibbar ist und der Bildspeicher (24) zur Aufnahme und Speicherung einer derartigen Kopie reduzierter Auflösung zusätzlich zu jedem der vom Vollbildspeicher empfangenen Vielzahl von Bild-Vollbildern eingerichtet ist.

2. System nach Anspruch 1, in dem die Kopie reduzierter räumlicher Auflösung eine räumliche Auflösung von einem Viertel der räumlichen Auflösung des Bild-Vollbildes voller räumlicher Auflösung besitzt.

3. System nach Anspruch 1 oder 2, in dem eine Zentralprozessoreinheit (16) zur Auswahl der Auslesung einer Vielzahl von Bild-Vollbildern reduzierter räumlicher Auflösung aus dem Bildspeicher und Anordnen der ausgelesenen Bild-Vollbilder als Bilder reduzierter Größe in einem durch den Vollbildspeicher erzeugten Ausgangs-Bild-Vollbild gekoppelt ist.

4. System nach den vorhergehenden Ansprüchen, weiterhin umfassend: einen Ausgangs-Digital-Analog-Umsetzer (28), der zur Aufnahme von Ausgangs-Bild-Vollbildern aus dem Vollbildspeicher und in Abhängigkeit davon zur Erzeugung eines die empfangenen Ausgangs-Bild-Vollbilder repräsentierenden analogen Videosignals gekoppelt ist.

5. System nach den vorhergehenden Ansprüchen, weiterhin umfassend: Mittel (12) zur Erzeugung eines eine Folge von Video-Bild-Vollbildern repräsentierenden analogen Videosignals und einen Analog-Digital-Umsetzer (14), der zur Umsetzung des analogen Videosignals in eine digitale Form eingerichtet ist, in der ein Video-Bild-Vollbild repräsentierende Digitaldaten vom Vollbildspeicher empfangen und in ihm gespeichert werden können.

6. System nach den Ansprüchen 3 bis 5, weiterhin umfassend: einen Anwender-Bedienungsplatz (18), der zur Aufnahme von Bedienungsbefehlen und Ausgabe von empfangenen Bedienungsbefehlen an die Zentralprozessoreinheit gekoppelt ist, wobei die Zentralprozessoreinheit zur Aufnahme der vom Anwender-Bedienungsplatz ausgehenden Bedienungsbefehlen gekoppelt ist und in Abhängigkeit davon Steuersignale zur Steuerung von Systemkomponenten wie den Eingangs-Analog-Digital-Umsetzer, den Bildspeicher, den Vollbildspeicher, den Größenreduzierer und den Ausgangs-Digital-Analog-Umsetzer sowie einen die Steuersignale auf die gesteuerten Systemkomponenten koppelnden Systembus (20) erzeugt.

7. Elektronisches Standbildspeichersystem umfassend: einen Vollbildspeicher (22), einen Massenbildspeicher (24) und einen Größenreduzierer (26), wobei der Vollbildspeicher zur Aufnahme, Übertragung zum Massenbildspeicher und wiederholten Ausgabe von normalen Bilddaten und der Massenbildspeicher zur Aufnahme und Speicherung von Bilddaten vom Vollbildspeicher und Bereitstellung von ausgewählten Bilddaten für den Vollbildspeicher eingerichtet ist und der Vollbildspeicher als Alternative zu einem einzigen Bild-Vollbild normaler Auflösung zur Aufnahme eines zusammengesetzten BildVollbildes, das aus einer Auswahl von aus dem Massenbildspeicher ausgelesenen Bildern reduzierter Auflösung zusammengesetzt ist, fähig ist, **dadurch gekennzeichnet**, daß der Größenreduzierer zur Bereitstellung einer Kopie reduzierter Auflösung eines im Vollbildspeicher gespeicherten Bildes normaler Auflösung eingerichtet ist und der Vollbildspeicher zur Zwischenspeicherung des Bild-Vollbildes normaler Auflösung in ersten Speicherplätzen und dessen Kopie in zweiten Speicherplätzen eingerichtet ist und daß der Massenbildspeicher vom Vollbildspeicher eine Kopie reduzierter Auflösung jedes vom Vollbildspeicher empfangenen Bild-Vollbildes normaler Auflösung aufnimmt und speichert, wobei Daten für das zusammengesetzte Bild-Vollbild in den ersten Speicherplätzen zwischengespeichert werden.

8. Verfahren zum Betrieb eines Videostandbild-Speichersystems, das einen Bildspeicher (24) und einen für einen bidirektionalen Verkehr von Videodaten mit dem Bildspeicher gekoppelten Vollbildspeicher (22) besitzt, umfassend die Schritte in folgender Reihenfolge:
(a) es werden Bilder voller Auslösung repräsentierende Videodaten in den Vollbildspeicher eingeschrieben;
(b) vom Vollbildspeicher werden eine Vielzahl von Bildern voller Auflösung repräsentierende Videodaten zum Bildspeicher übertragen, für jedes einer Vielzahl von ursprünglich in den Vollbildspeicher eingeschriebenen Bildern voller Auflösung wird eine entsprechende Kopie reduzierter Auflösung erzeugt und die entsprechende Kopie wird zum Vollbildspeicher zurückgeführt, so daß die jedes der Vielzahl von in den Bildspeicher eingeschriebenen Bildern voller Auflösung repräsentierenden Daten von einer entsprechenden Kopie reduzierter Auflösung begleitet sind; und
(c) zum Zusammensetzen im Vollbildspeicher als einzelnes zusammengesetztes Bild werden vom Bildspeicher zum Vollbildspeicher Videodaten übertragen, die eine Kopie reduzierter Auflösung jedes einer ausgewählten Vielzahl von Bildern voller Auflösung repräsentieren.

9. Verfahren nach Anspruch 8, bei dem jede Kopie reduzierter Auflösung eine räumliche Auflösung von einem Viertel der räumlichen Auflösung des entsprechenden Bildes voller Auflösung in jeder von zwei Anzeigerichtungen besitzt.

10. Verfahren nach Anspruch 8 oder 9, bei dem die vom Bildspeicher zum Vollbildspeicher übertragenen Videodaten in Plätzen gespeichert werden, die zur Erzeugung eines zusammengesetzten Bildes ausgewählt sind, in dem jedes der durch die übertragenen Videodaten repräsentiertes Bild an einer ausgewählten unterschiedlichen Stelle angeordnet ist.

## Revendications

1. Système électronique de mémorisation d'images fixes comprenant : une mémoire d'images (24) agencée pour y mémoriser de façon à pouvoir les récupérer une pluralité d'images complètes d'images vidéo à résolution normale, la mémoire d'images étant capable de mémoriser des images complètes à résolution spatiale réduite ; une mémoire d'images complètes (22) qui peut être mise en oeuvre pour recevoir une image complète à résolution spatiale normale et pour la transférer dans la mémoire d'images (24), la mémoire d'images complètes pouvant être mise en oeuvre pour recevoir à partir de la mémoire d'images une image complète vidéo sélectionnée pour la sortie, cette image complète étant soit une image complète unique à résolution normale soit une image complète comprenant des images complètes à résolution réduite ; et un réducteur de taille (26) connecté pour recevoir de la mémoire d'images complètes une image complète à résolution spatiale normale et pour produire en réponse à cela une copie à résolution spatiale réduite, caractérisé en ce que le réducteur de taille (26) est agencé pour renvoyer à la mémoire d'images complètes (22) la copie à résolution spatiale réduite, en ce que la mémoire d'images complètes (22) peut être mise en oeuvre pour recevoir et mémoriser la copie à résolution spatiale réduite tout en continuant à mémoriser l'image complète à résolution spatiale normale, et en ce que la mémoire d'images (24) est agencée pour recevoir et mémoriser une telle copie à résolution réduite en plus de chacune d'une pluralité d'images complètes à résolution normale qui est reçue de la mémoire d'images complètes.

2. Système selon la revendication 1, dans lequel la copie à résolution spatiale réduite a une résolution spatiale d'un quart de la résolution spatiale de l'image complète à résolution spatiale normale.

3. Système selon la revendication 1 ou 2, dans lequel une unité centrale de traitement (16) est connectée pour effectuer, en réponse aux ordres d'un opérateur, la récupération d'une pluralité d'images complètes à résolution spatiale réduite dans la mémoire d'images et la mise en place des images complètes récupérées, comme images de taille réduite, dans une image complète de sortie produite par la mémoire d'images complètes.

4. Système selon l'une quelconque des revendications précédentes, comprenant en outre un convertisseur numérique vers analogique de sortie (28) connecté pour recevoir des images complètes de sortie provenant de la mémoire d'images complètes, et pour produire, en réponse à cela, un signal vidéo analogique représentant les images complètes de sortie reçues.

5. Système selon l'une quelconque des revendications précédentes, comprenant en outre un moyen générateur (12) produisant un signal vidéo analogique représentant une séquence d'images complètes vidéo et un convertisseur analogique vers numérique (14) agencé pour convertir le signal vidéo analogique en une forme numérique dans laquelle les données numériques représentant une image complète vidéo peuvent être reçues et mémorisées par la mémoire d'images complètes.

6. Système selon les revendications 3 à 5, comprenant en outre un pupitre d'utilisateur (18) connecté pour recevoir des instructions d'opérateur et pour sortir les instructions d'opérateur reçues vers l'unité centrale de traitement, l'unité centrale de traitement étant connectée pour recevoir les instructions d'opérateur sorties par le pupitre d'opérateur et pour produire, en réponse à cela, des signaux de commande pour commander les dispositifs du système incluant le convertisseur analogique vers numérique d'entrée, la mémoire d'images, la mémoire d'images complètes, le réducteur de taille, et le convertisseur numérique vers analogique de sortie, et un bus de système (20) délivrant les signaux de commande aux dispositifs du système commandés.

7. Système électronique de mémoire d'images fixes comprenant : une mémoire d'images complètes (22), une mémoire de masse d'images (24) et un réducteur de taille (26), la mémoire d'images complètes étant agencée pour recevoir, transférer vers la mémoire de masse d'images et sortir de façon répétitive des données d'images normales, et la mémoire de masse d'images étant agencée pour recevoir et mémoriser des données d'image provenant de la mémoire d'images complètes et pour fournir des données d'images sélectionnées à la mémoire d'images complètes, la mémoire d'images complètes étant capable de recevoir à partir de la mémoire d'images, comme alternative à une image complète unique à résolution normale, une image complète composite composée d'une sélection de copies à résolution réduite récupérées à partir de la mémoire de masse d'images, caractérisé en ce que le réducteur de taille est agencé pour fournir à la mémoire d'images complètes une copie à résolution réduite d'une image complète à résolution normale mémorisée dans la mémoire d'images complètes, la mémoire d'images complètes étant agencée pour mémoriser l'image complète à résolution normale temporairement dans des premiers emplacements de mémoire et la copie de celle-ci dans des seconds emplacements de mémoire, et caractérisé en outre en ce que la mémoire de masse d'images reçoit de la mémoire d'images complètes, et mémorise, une copie à résolution réduite de chaque image complète à résolution normale qu'elle reçoit de la mémoire d'images complètes ; les données pour ladite image complète composite étant mémorisées temporairement dans lesdits premiers emplacements de mémoire.

8. Procédé de mise en oeuvre d'un système de mémoire vidéo d'images fixes comportant une mémoire d'images (24) et une mémoire d'images complètes (22) reliée, pour une transmission bidirectionnelle de données vidéo, à la mémoire d'images, comprenant dans l'ordre suivant les étapes de :
(a) écriture dans la mémoire d'images complètes de données vidéo représentant des images à résolution normale ;
(b) transfert vers la mémoire d'images à partir de la mémoire d'images complètes de données vidéo représentant une pluralité d'images à résolution normale, production pour chacune d'une pluralité d'images à résolution normale, écrites à l'origine dans la mémoire d'images complètes, d'une copie à résolution réduite respective et renvoi de ladite copie respective à la mémoire d'images complètes de sorte que les données vidéo représentant chacune d'une pluralité d'images à résolution normale écrites dans la mémoire d'images sont accompagnées par une copie à résolution reduite respective ; et,
(c) transfert à partir de la mémoire d'images vers la mémoire d'images complètes, pour assemblage dans la mémoire d'images complètes sous forme d'une image composite unique, des données vidéo représentant une copie à résolution réduite de chacune d'une pluralité sélectionnée d'images à résolution normale.

9. Procédé selon la revendication 8, dans lequel chaque copie à résolution réduite a une résolution spatiale d'un quart de la résolution spatiale de l'image à résolution normale correspondante dans chacune des deux dimensions d'affichage.

10. Procédé selon la revendication 8 ou la revendication 9, dans lequel lesdites données vidéo transférées de la mémoire d'images vers la mémoire d'images complètes, sont mémorisées dans des emplacements sélectionnés pour produire une image composite comportant chacune des images représentées par les données vidéo transférées placée, dans l'image composite, dans une position différente choisie.
